(19) Europäisches Patentamt / European Patent Office / Office européen des brevets

(11) **EP 2 824 494 A2**

(12) # EUROPEAN PATENT APPLICATION

(43) Date of publication:
**14.01.2015 Bulletin 2015/03**

(51) Int Cl.:
***G02B 13/00*** *(2006.01)*

(21) Application number: **13190026.8**

(22) Date of filing: **24.10.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **09.07.2013   TW 102212968 U**

(71) Applicant: **Ability Opto-Electronics Technology
Co., Ltd.
Taichung City 428 (TW)**

(72) Inventors:
• **Liao, Kuo-yu
437 Taichung City (TW)**
• **Tsai, Chen-hung
428 Taichung City (TW)**

(74) Representative: **De Pablos Riba, Julio
Los Madrazo, 24
28014 Madrid (ES)**

(54) ## A thin-type imaging lens assembly with four lenses

(57)     An imaging lens assembly comprises a fixing diaphragm (70) and an optical set including four lenses. An arranging order from an object side to an image side is: a first positive lens (10); a second negative lens (20); a third positive lens (30); and a fourth negative lens (40). At least one surface of the first and the second lenses (10),(20) is aspheric. At least one surface of the third and the fourth lenses (30),(40) are aspheric; the aspheric surface of the fourth lens has at least one inflection point. The fixing diaphragm (70) is disposed between an object and the second lens (20). By the concatenation between the lenses and the adapted curvature radius, thickness, interval, refractivity, and Abbe numbers, the assembly attains a big diaphragm with wide-angle, a shorter height, and a better optical aberration.

FIG.1

**Description**

**BACKGROUND OF THE INVENTION**

**1. Field of the Invention**

The present invention relates to a thin-type imaging lens assembly with four lenses, in particular to a lens structure attaining a shorter height and a high resolution by curvature, interval and optical parameter between each lens.

**2. Description of the Related Art**

The conventional lens structure adopts an image display lens assembly which is applied to smart phone, tablet PC, cell phone, notebook, and webcam. The electronic products are developed to become lighter, thinner, shorter, and smaller and provide with higher efficiency. A video sensor of the image display lens assembly, such as Charge Coupled Device (CCD) or Complementary Metal Oxide Semiconductor (CMOS), is also developed for more pixels, so the lens structure is ceaselessly developed to be provided with compactness and higher resolution.

Therefore, the present invention is disclosed in accordance with a lens structure with multi-lens for a demand of the development of the image display lens assembly, especially to an imaging lens assembly of a lens structure with at least two lenses.

**SUMMARY OF THE INVENTION**

In view of the conventional lens structure that has big volume and lack of efficiency, a thin-type imaging lens assembly with four lenses is disclosed.

It is an object of the present invention to provide a thin-type imaging lens assembly with four lenses, which comprises a fixing diaphragm and an optical set. The optical set includes a first lens, a second lens, a third lens, and a fourth lens. An arranging order thereof from an object side to an image side is: the first lens with a positive refractive power defined near an optical axis, a convex surface directed toward the object side, and a convex surface directed toward the image side; the second lens with a negative refractive power defined near the optical axis and a concave surface directed toward the object side; the third lens having a lens with a positive refractive power defined near the optical axis, a concave surface directed toward the object side, and a convex surface directed toward the image side; the fourth lens having a negative refractive power defined near the optical axis, a convex surface directed toward the object side and disposed near the optical axis, a concave surface directed toward the image side and disposed near the optical axis, and at least one inflection point defined from the optical axis to an end point of the aspheric surfaces. At least one surface of the first lens and the second lens is aspheric. At least one surface of the third lens and the fourth lens are aspheric. The fixing diaphragm is disposed between an object and the second lens.

The imaging lens assembly satisfies the following conditional expression: 0.3<f/TL<0.8. The TL is defined as a distance from a top point of the object side surface of the first lens to an imaging surface side. The f is defined as a focal length of the entire lens assembly.

The imaging lens assembly satisfies the following conditional expression: 0.6<TL/Dg<1.2. The Dg is defined as a length diagonal of a maximum using visual angle of the lens assembly imaged on the imaging surface.

A shape of the aspheric surface satisfies a formula of:

$$z = \frac{ch^2}{1+[1-(k+1)c^2h^2]^{0.5}} + Ah^4 + Bh^6 + Ch^8 + Dh^{10} + Eh^{12} + Fh^{14} + Gh^{16} \ldots\ldots$$

The z is defined as a position value about a location at a height of h along a direction of the optical axis referring to a surface top point. The k is defined as a conic constant. The c is a reciprocal of a radius of a curvature. The A, B, C, D, E, F, G, etc. are defined as high-order aspheric surface coefficients.

The present invention is characterized in that a lens structure attains a big diaphragm with wide-angle, a shorter height, and a high resolution by curvature, interval, and optical parameter between each lens.

**BRIEF DESCRIPTION OF THE DRAWINGS**

Fig. **1**    is a schematic view showing an optical structure of a first preferred embodiment of the present invention;
Fig. **2**    is a schematic view showing an astigmatic aberration of the first preferred embodiment of the present invention;
Fig. **3**    is a schematic view showing a distorted aberration of the first preferred embodiment of the present invention;
Fig. **4**    is a schematic view showing a spherical aberration of the first preferred embodiment of the present invention;

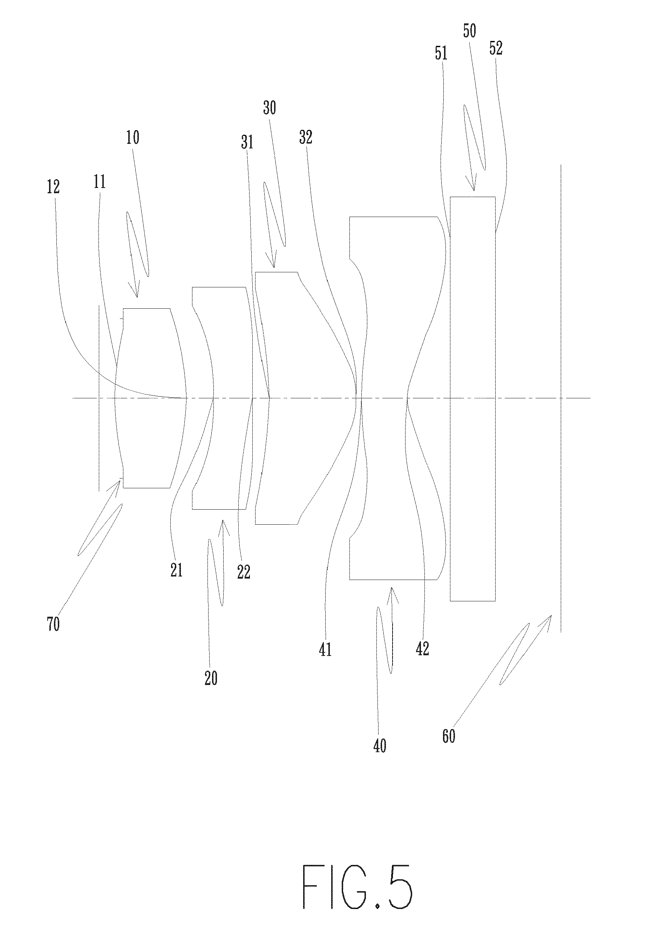

Fig. **5**    is a schematic view showing an optical structure of a secondpreferred embodiment of the present invention;
Fig. **6**    is a schematic view showing an astigmatic aberration of the second preferred embodiment of the present invention;
Fig. **7**    is a schematic view showing a distorted aberration of the second preferred embodiment of the present invention; and
Fig. **8**    is a schematic view showing a spherical aberration of the second preferred embodiment of the present invention.

## DETAILED DESCRIPTION OF THE PREFERRED EMBODIMENTS

Before describing in detail, it should note that the like elements are denoted by the similar reference numerals throughout disclosure.

The present invention provides an imaging lens structure, in particular to a lens structure attaining a big diaphragm with wide-angle, a shorter height, and a high resolution by a curvature, an interval, and an optical parameter between each lens.

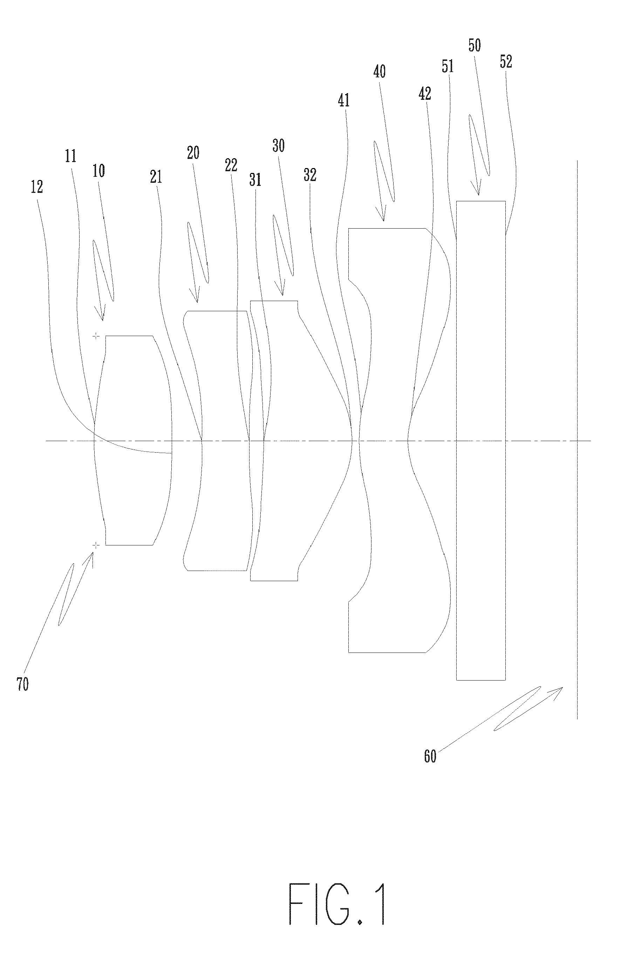

Referring to Fig. **1,** a schematic view of an optical structure of a thin-type imaging lens assembly with four lenses is shown. The structure of the imaging lens comprises a fixing diaphragm **70** and an optical set. The optical set includes a first lens **10,** a second lens **20,** a third lens **30,** and a fourth lens **40.** An arranging order thereof from an object side to an image side is: the first lens **10** with a positive refractive power defined near an optical axis, a convex surface directed toward the object side, and a convex surface directed toward the image side; the second lens **20** with a negative refractive power defined near the optical axis and a concave surface directed toward the object side; the third lens **30** with a positive refractive power defined near the optical axis, a concave surface directed toward the object side, and a convex surface directed toward the image side; the fourth lens **40** having a negative refractive power defined near the optical axis, a convex surface directed toward the object side and disposed near the optical axis, a concave surface directed toward the image side and disposed near the optical axis, at least one inflection point defined from the optical axis to an end point of the aspheric surfaces, at least one surface of the first lens **10** and the second lens **20** is aspheric, and at least one surface of the third lens **30** and the fourth lens **40** are aspheric; the fixing diaphragm **70** disposed between an object and the second lens **20;** a filter unit **50** used for filtering light with specific wave length being adopted by an infrared stopping filter unit applied to a visible light image or an infrared band-pass unit applied to an infrared imaging; and an image sensor **60** (an imaging surface side) used for receiving a digital signal transformed by an infrared invisible light image of the filter.

The imaging lens assembly satisfies the following conditional expression: 0.3<f/TL<0.8. The TL is defined as a distance from a top point of the object side surface of the first lens to the imaging surface side. The f is defined as a focal length of the entire lens assembly.

The imaging lens assembly satisfies the following conditional expression: 0.6<TL/Dg<1.2. The Dg is defined as a length diagonal of a maximum using visual angle of the lens assembly imaged on the imaging surface.

The first lens **10** includes a first surface **11** facing an object side and a second surface **12** facing the imaging surface side. The first surface **11** is defined as a convex surface disposed near the optical axis opposite to the object side. The second surface **12** is defined as a convex surface disposed near the optical axis opposite to the imaging surface side. The second lens **20** includes a third surface **21** facing the object side and a fourth surface **22** facing the imaging surface side. The third surface **21** is defined as a concave surface disposed near the optical axis opposite to the object side. The fourth surface **22** is defined as a concave surface disposed near the optical axis opposite to the imaging surface side. The third lens **30** includes a fifth surface **31** facing the object side and a sixth surface **32** facing the imaging surface side. The fifth surface **31** is defined as a concave surface disposed near the optical axis opposite to the object side. The sixth surface **32** is defined as a convex surface disposed near the optical axis opposite to the imaging surface side. The fourth lens **40** includes a seventh surface **41** facing the object side and an eighth surface **42** facing the imaging surface side. The seventh surface **41** is defined as a convex surface disposed near the optical axis opposite to the object side. The eighth surface **42** is defined as a concave surface disposed near the optical axis opposite to the imaging surface side. At least one surface of the first lens **10** and the second lens **20** is aspheric, and at least one surface of the third lens **30** and the fourth lens **40** are aspheric, thereby correcting the spherical aberration and the image aberration for having a characteristic of low tolerance sensitivity.

A shape of the aspheric surface of the imaging lens assembly satisfies a formula of:

$$z = \frac{ch^2}{1+[1-(k+1)c^2 h^2]^{0.5}} + Ah^4 + Bh^6 + Ch^8 + Dh^{10} + Eh^{12} + Fh^{14} + Gh^{16} + \ldots\ldots$$

The z is defined as a position value about a location at a height of h along a direction of the optical axis referring to a surface top point. The k is defined as a conic constant. The c is a reciprocal of a radius of a curvature. The A, B, C, D, E, F, G, etc. are defined as high-order aspheric surface coefficients.

In a wide-angle micro-optical image capturing device of the present invention, the fixing diaphragm **70** is disposed between the object and the second lens **20** for getting an incident beam. The first lens **10** is adopted by a lens with positive refractive power defined near the optical axis. The first lens **10** adopts the first surface **11** convexly defined toward the object side for assembling the external incident beam with wide-angle and keeping the beam on the second surface **12** of the first lens **10,** thereby presenting a function of the aspheric surface, correcting the aberration, reducing the tolerance sensitivity, and rendering the device have big-wide-angle. The third surface **21** and the fifth surface **31** respectively defined on the second lens **20** and the third lens **30** as concave surfaces disposed near the optical axis opposite to the object side are then expanded and radiated, so that the beam is able to be spread on the eighth surface **42** of the fourth lens **40** with a larger dimension. That is to say, the incident beam is expanded and radiated by the third surface **21** and the fifth surface **31** so as to be spread on the eighth surface **42** with a larger dimension, thereby presenting the function of aspheric surface, correcting the aberration, and reducing tolerance sensitivity.

The aspheric surface not only corrects the spherical aberration and the image aberration but also reduces the full length of the lens optical system. The first lens **10,** the second lens **20,** the third lens **30,** and the fourth lens **40** are preferably adopted by plastic, which is conducive to eliminate the aberration and reduce the weight of the lens. The entire optical system consists of four plastic lenses and benefits a mass production. Furthermore, the optical system provides with the low tolerance sensitivity to meet a requirement of the mass production.

By the concatenation between the above-mentioned surfaces of lenses and the adapted curvature radius, thickness, interval, refractivity, and Abbe numbers, the assembly attains a big diaphragm with wide-angle, a shorter height, and a better optical aberration.

**First preferred embodiment of the present invention:**

Due to the above-mentioned technique of the present invention, it is able to be practiced in accordance with the following values:

| Basic lens data of the first preferred embodiment | | | | |
|---|---|---|---|---|
| Surfaces | | Curvature radius (Radius) | Thickness/In terval (Thickness) | Refractivity (Nd) | Abbe number (Vd) |
| Fixing diaphragm **70** | | ∞ | -0.04 | | |
| First lens **10** | First surface **11** | 1.15 | 0.32 | 1.5441 | 56.09 |
| | Second surface **12** | -3.31 | 0.12 | | |
| Second lens **20** | Third surface **21** | -10.0 | 0.20 | 1.635500 | 23.891420 |
| | Fourth surface **22** | 3.21 | 0.07 | | |
| Third lens **30** | Fifth surface **31** | -1.15 | 0.37 | 1.5441 | 56.09 |
| | Sixth surface **32** | -0.37 | 0.03 | | |
| Fourth lens **40** | Seventh surface **41** | 0.78 | 0.20 | 1.534611 | 56.072163 |
| | Eighth surface **42** | 0.30 | 0.20 | | |

(continued)

| Basic lens data of the first preferred embodiment | | Curvature radius (Radius) | Thickness/In terval (Thickness) | Refractivity (Nd) | Abbe number (Vd) |
|---|---|---|---|---|---|
| Surfaces | | | | | |
| Filter unit 50 | Ninth surface 51 | ∞ | 0.21 | 1.516798 | 64.198258 |
| | Tenth surface 52 | ∞ | 0.30 | | |

The filter unit 50 has a thickness of 0.21mm.

The A, B, C, D, E, F, and G are defined as high-order aspheric surface coefficients.

The values of quadratic surface coefficient of the aspheric surface of the first preferred embodiment are listed as follows:

The first surface 11 (k=-5.38):

A: -0.3081197
B: 16.258579
C: -496.70534
D: 7166.1666
E: -58684.873
F: 253687.41
G: -454271.82
The second surface 12 (k=12.07):
A: -1.1794601
B: -9.6792113
C: 198.62572
D: -2387.9023
E: 16554.949
F: -58551.248
G: 79979.896
The third surface 21(k=15.39) :
A: -1.9294681
B: -12.954564
C: 164.41796
D: -1000.4379
E: 6390.1008
F: -24827.633
G: 36002.667

The fourth surface 22(k=-200.0) :

A: 1.7098738
B: -27.547123
C: 199.38445
D: -766.05050
E: 210.06524
F: 6640.7099
G: -12361.994
The fifth surface 31(k=1.91) :
A: 3.9392086
B: -12.649364
C: -91.632654
D: 1755.6071
E: -11903.808
F: -35996.894

G: -39951.310

The sixth surface **32**(k=-5.51) :

A: -4.1854094
B: 51.437818
C: -454.48526
D: 2652.5890
E: -9019.8863
F: 16110.841
G: -11574.730

The seventh surface **41**(k=-3.55) :

A: -2.4126233
B: 11.561474
C: -76.191919
D: 365.04515
E: -1027.4361
F: 1500.2847
G: -892.37580

The eighth surface **42**(k=-4.24) :

A: -1.0647050
B: 2.5299538
C: -6.3145965
D: 13.876987
E: -22.676248
F: 20.462749
G: -7.507268

According to the above-mentioned values, the related exponent of performance of the micro-image capturing lens is: f1=1.60mm; f2=-3.77mm; f3=0.85mm; f4=-1.09mm; EFL=1.31mm; TL=2.01mm; Dg=2.06mm; EFL/TL=0.65; TL/Dg=0.98.

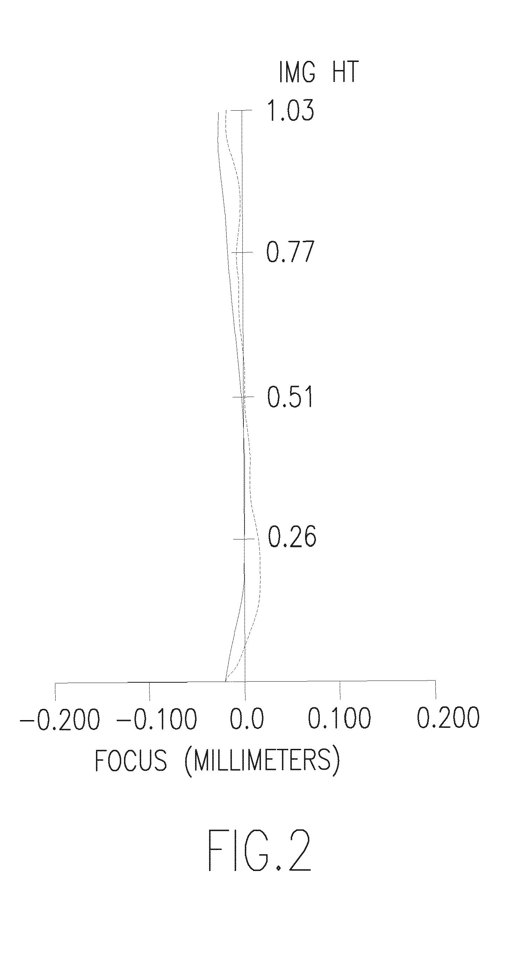

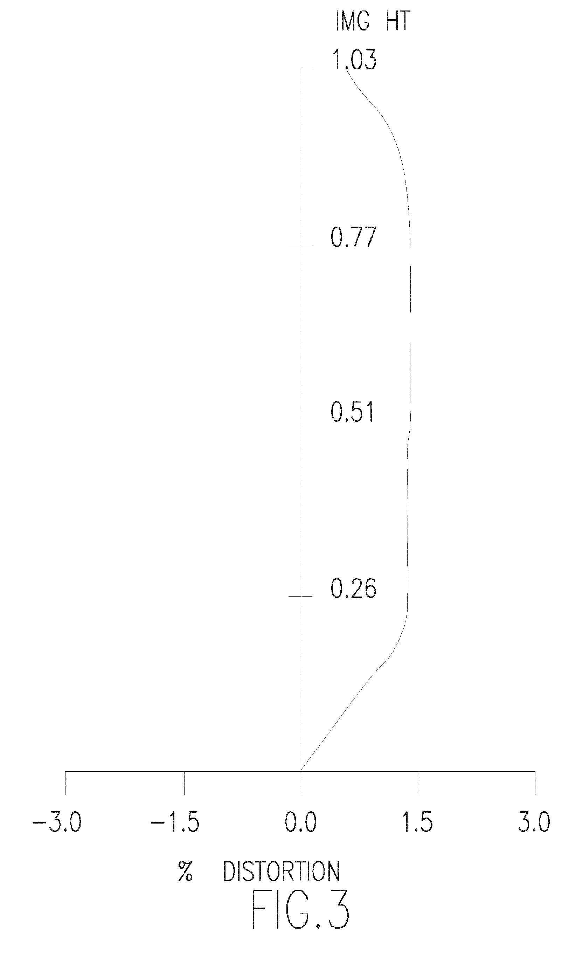

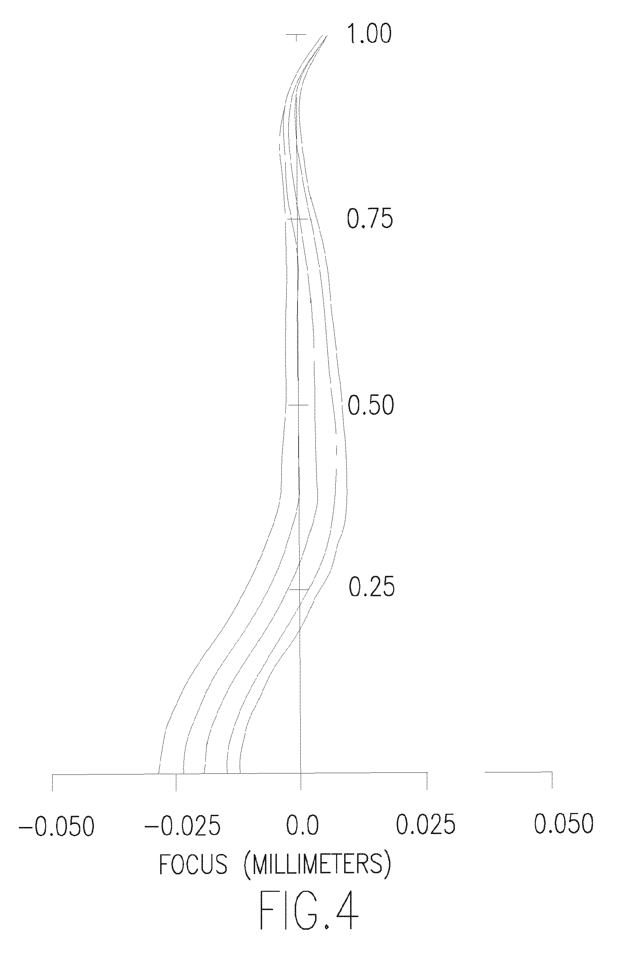

Referring to Fig. **2,** a schematic view of an astigmatic aberration of the first preferred embodiment of the present invention is shown. Referring to Fig. **3,** a schematic view of a distorted aberration of the first preferred embodiment of the present invention is shown. Referring to Fig. **4,** a schematic view of a spherical aberration of the first preferred embodiment of the present invention is shown. The measured astigmatic aberration, distorted aberration, and spherical aberration are in the standard scope and have a good optical performance and imaging quality according to the above-mentioned figures.

**Second preferred embodiment of the present invention:**

Due to the above-mentioned technique of the present invention, it is able to be practiced in accordance with the following values:

| Basic lens data of the second preferred embodiment | | | | | |
|---|---|---|---|---|---|
| Surfaces | | Curvature radius (Radius) | Thickness/In terval (Thickness) | Refractivity (Nd) | Abbe number (Vd) |
| First lens **10** | First surface **11** (the fixing diaphrag m **70)** | 1.65 | 0.47 | 1.5441 | 56.09 |
| | Second surface **12** | -2.77 | 0.17 | | |
| Second lens **20** | Third surface **21** | -2.63 | 0.26 | 1.635500 | 23.891420 |
| | Fourth surface **22** | -31.03 | 0.11 | | |

(continued)

| Surfaces | | Curvature radius (Radius) | Thickness/In terval (Thickness) | Refractivity (Nd) | Abbe number (Vd) |
|---|---|---|---|---|---|
| Third lens **30** | Fifth surface **31** | -1.59 | 0.57 | 1.5441 | 56.09 |
| | Sixth surface **32** | -0.48 | 0.03 | | |
| Fourth lens **40** | Seventh surface **41** | 1.47 | 0.30 | 1.534611 | 56.072163 |
| | Eighth surface **42** | 0.42 | 0.27 | | |
| Filter unit **50** | Ninth surface **51** | ∞ | 0.30 | 1.516798 | 64.198258 |
| | Tenth surface **52** | ∞ | 0.42 | | |

<p style="text-align:center">Basic lens data of the second preferred embodiment</p>

The filter unit **50** has a thickness of 0.3mm.

The A, B, C, D, E, F, and G are defined as high-order aspheric surface coefficients.

The values of quadratic surface coefficient of the aspheric surface of the second preferred embodiment are listed as follows:

The first surface **11** (k=-4.46):

A: -0.11793308

B: 2.312182

C: -36.511014

D: 252.50961

E: -982.12147

F: 1977.7645

G: -1632.3527

The second surface **12**(k=-25.37) :

A: -0.42555237

B: -3.0752288

C: 27.501249

D: -151.17332

E: 489.54646

F: -853.89616

G: 611.88916

The third surface **21**(k=-33.48) :

A: -0.67729382
B: -1.7819054
C: 4.9864964

D: 18.095894
E: -84.626763
F: 127.86346
G: -63.68553

The fourth surface **22**(k=-21.50):

A: 0.37431509
B: -3.6299761
C: 11.722422
D: -22.943566
E: 21.701385
F: 2.1034529
G: -11.217456

The fifth surface **31**(k=1.89):

A: 0.97399538
B: -1.9572256
C: -4.0805823
D: 39.177621
E: -110.4093
F: 150.28777 G: -80.024502

The sixth surface **32**(k=-5.58) :

A: -2.0330788
B: 11.699186
C: -45.519288
D: 110.24445
E: -157.17487
F: 123.57382
G: -41.482307

The seventh surface **41**(k=-2.20) :

A: -1.000893
B: 2.4063511
C: -6.8590943
D: 13.267147
E: -15.419277
F: 9.8360708
G: -2.8306765

The eighth surface **42**(k=-4.48) :

A: -0.41774612
B: 0.68438911
C: -1.1364654
D: 1.3167622
E: -0.93961956
F: 0.35833015
G: -0.055820864

According to the above-mentioned values, the related exponent of performance of the micro-image capturing lens is: f1=1.97mm; f2=-4.51mm; f3=1.06mm; f4=-1.20mm; EFL=1.87mm; TL=3.00mm; Dg=2.94mm; EFL/TL=0.62; TL/Dg=1.02.

In the second preferred embodiment of the present invention, the first lens **10** includes a first surface **11** facing an object side and a second surface **12** facing the imaging surface side. The first surface **11** is defined as a convex surface disposed near the optical axis opposite to the object side. The second surface **12** is defined as a convex surface disposed near the optical axis opposite to the imaging surface side. The second lens **20** includes a third surface **21** facing the object side and a fourth surface

**22** facing the imaging surface side. The third surface **21** is defined as a concave surface disposed near the optical axis opposite to the object side. The fourth surface **22** is defined as a convex surface disposed near the optical axis opposite to the imaging surface side. The third lens **30** includes a fifth surface **31** facing the object side and a sixth surface **32** facing the imaging surface side. The fifth surface **31** is defined as a concave surface disposed near the optical axis opposite to the object side. The sixth surface **32** is defined as a convex surface disposed near the optical axis opposite to the imaging surface side. The fourth lens **40** includes a seventh surface **41** facing the object side and an eighth surface 42 facing the imaging surface side. The seventh surface **41** is defined as a convex surface disposed near the optical axis opposite to the object side. The eighth surface **42** is defined as a concave surface disposed near the optical axis opposite to the imaging surface side. At least one surface of the first lens **10** and the second lens **20** is aspheric, and at least one surface of the third lens **30** and the fourth lens **40** are aspheric, thereby correcting the spherical aberration and the image aberration for having a characteristic of low tolerance sensitivity.

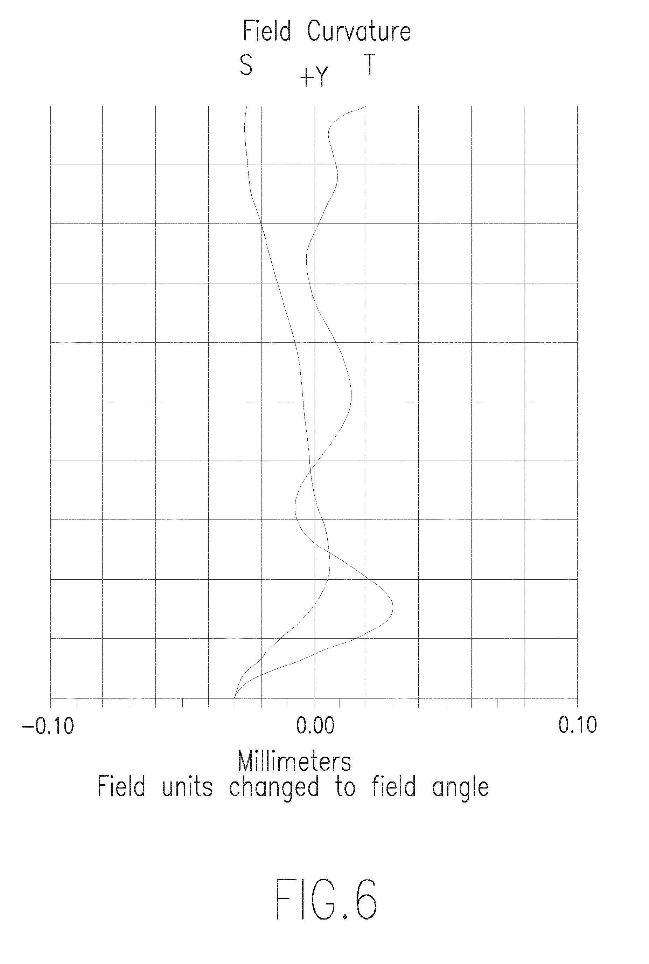

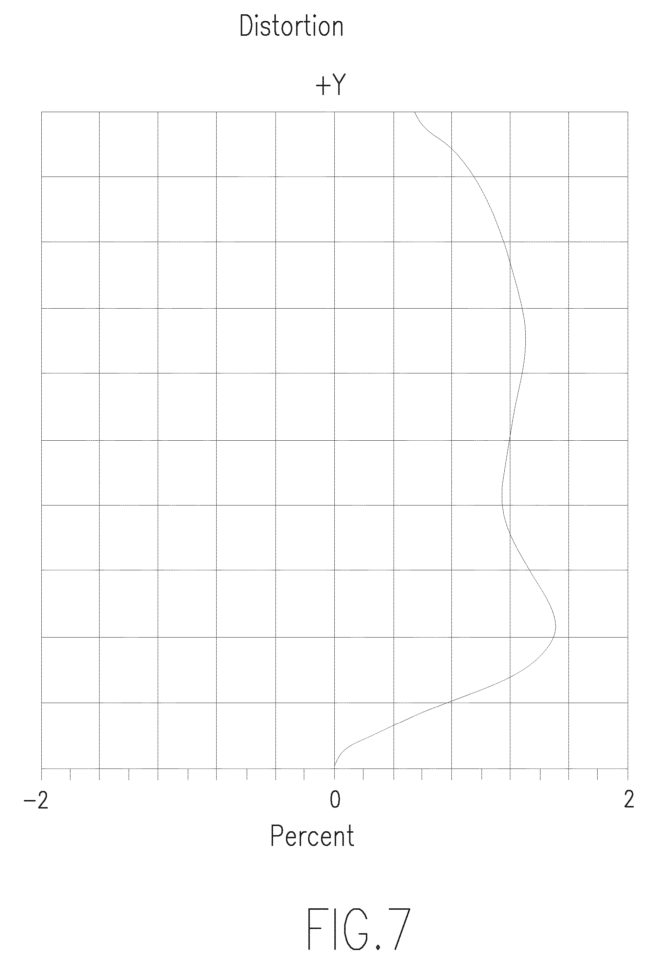

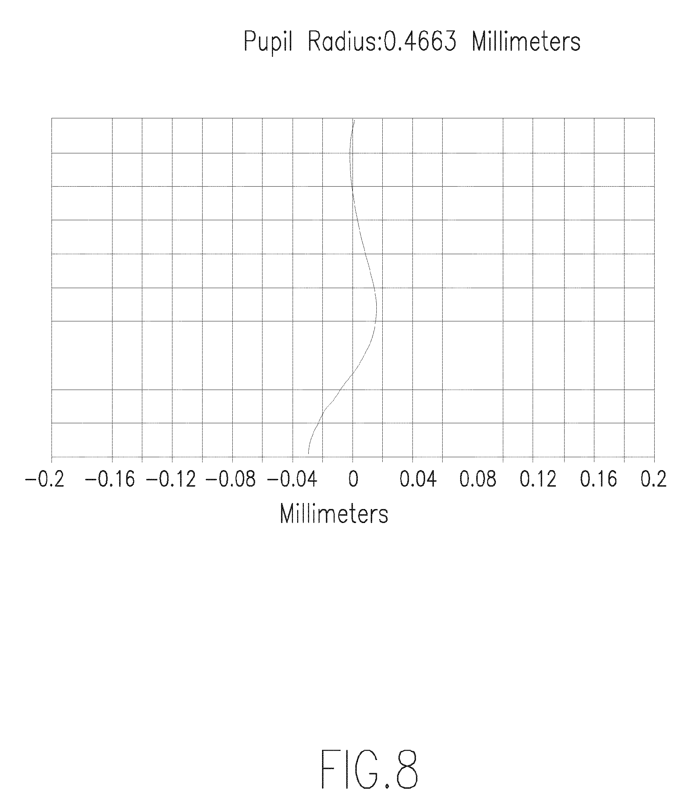

Referring to Fig. **6,** a schematic view of an astigmatic aberration of the second preferred embodiment of the present invention is shown. Referring to Fig. **7,** a schematic view of a distorted aberration of the second preferred embodiment of the present invention is shown. Referring to Fig. **8,** a schematic view of a spherical aberration of the second preferred embodiment of the present invention is shown. The measured astigmatic aberration, distorted aberration, and spherical aberration are in the standard scope and have a good optical performance and imaging quality according to the above-mentioned figures.

The micro-optical image capturing device utilizes four lenses which include at least one aspheric surface or two aspheric surfaces with the refractive power sequentially arranged as positive, negative, positive, and negative, and the filter unit **50** which filters a wave length of the light and allows the demanded wave length. The filter unit **50** is preferably adopted by an infrared stopping filter unit applied to the visible light image or an infrared band-pass unit applied to an infrared imaging.

By making use of the aspheric surface that corrects the aberration and reduces the tolerance sensitivity, not only the aberration is corrected but also the full length of the lens optical system is reduced. The first, second, third, and fourth lenses are preferably adopted by plastic, which is conducive to eliminate the aberration and reduce the weight of the lens. The optical system consists of four plastic lenses and provides with the low tolerance sensitivity. The optical system is also easy to be manufactured and assembled and benefits a mass production. Furthermore, the optical system provides with a good imaging quality to meet the requirement of miniaturizing the portable image capturing products.

While we have shown and described the embodiment in accordance with the present invention, it should be clear to those skilled in the art that further embodiments may be made without departing from the scope of the present invention.

## Claims

1. A thin-type imaging lens assembly with four lenses comprising a fixing diaphragm (70) and an optical set; said optical set including a first lens (10), a second lens (20), a third lens (30), and a fourth lens (40), an arranging order thereof from an object side to an image side being:

   said first lens (10) having a positive refractive power defined near an optical axis, a convex surface directed toward said object side, and a convex surface directed toward said image side; at least one surface of said first lens (10) being aspheric;
   said second lens (20) having a negative refractive power defined near said optical axis and a concave surface directed toward said object side; at least one surface of said second lens (20) being aspheric;
   said third lens (30) having a lens with a positive refractive power defined near said optical axis, a concave surface directed toward said object side, and a convex surface directed toward said image side; at least one surface of said third lens (30) being aspheric;
   said fourth lens (40) with a negative refractive power defined near said optical axis, a convex surface directed toward said object side and disposed near said optical axis, and a concave surface directed toward said image side and disposed near said optical axis; at least one surface of said fourth lens (40) being aspheric and having at least one inflection point defined from said optical axis to an end point of said aspheric surfaces; and
   said fixing diaphragm (70) disposed between an object and said second lens.

2. The thin-type imaging lens assembly with four lenses as claimed in claim 1 further satisfying the following expression:

0.3<f/TL<0.8, wherein said TL is defined as a distance from a top point of said object side surface of said first lens (10) to an imaging surface side, and said f is defined as a focal length of said entire lens assembly.

3. The thin-type imaging lens assembly with four lenses as claimed in claim 1 further satisfying the following conditional expression: 0.6<TL/Dg<1.2, wherein said Dg is defined as a length diagonal of a maximum using visual angle of the lens assembly imaged on said imaging surface.

FIG.1

IMG HT

1.03

0.77

0.51

0.26

−0.200   −0.100   0.0   0.100   0.200

FOCUS (MILLIMETERS)

FIG.2

FIG.3

FOCUS (MILLIMETERS)

FIG.4

FIG.5

Field Curvature

S      T
    +Y

−0.10                0.00                0.10

Millimeters
Field units changed to field angle

FIG.6

Distortion

+Y

−2            0            2

Percent

FIG.7

Pupil Radius:0.4663 Millimeters

−0.2   −0.16  −0.12  −0.08  −0.04   0    0.04   0.08   0.12   0.16   0.2

Millimeters

FIG.8